# EUROPEAN PATENT SPECIFICATION

(11) **EP 4 469 512 B1**
(45) Date of publication and mention of the grant of the patent: **08.04.2026**
(21) Application number: 23703299.0
(22) Date of filing: 26.01.2023
(51) Int. Cl.: C08K 3/34, C09D 133/12, C09J 133/12, C04B 28/02, C04B 14/06, C04B 14/04, C04B 14/28, C04B 14/42, C04B 111/50, C09J 7/10, C04B 111/00, E04F 13/18, E04F 13/08

(54) **FACADE MATERIAL**
FASSADENMATERIAL
MATERIAU DE FAÇADE

(30) Priority: 27.01.2022 GB 202201042
(43) Date of publication of application: 04.12.2024
(73) Proprietor: Mauer Limited, St Helier JE4 9WG (JE)
(72) Inventor: JAY, Daniel Adam, Derby, DE65 5BT (GB)
(74) Representative: J A Kemp LLP
(86) International application number: PCT/GB2023/050171
(87) International publication number: WO 2023/144538

(56) References cited:
- CN-A- 108 342 170
- DE-B3- 102018 122 412
- GB-A- 2 515 265
- JP-A- 2021 131 010
- US-A- 4 710 526
- US-A1- 2003 050 380
- US-A1- 2018 327 310
- US-A1- 2020 208 002
- US-B1- 10 351 724

## Description

### Field of the invention

The present disclosure relates to a facade surface covering for installation on a surface of a structure, a surface element for a facade surface covering, a filler for a facade surface covering, a composition for producing a facade surface covering, a building, a modular building unit or any component thereof comprising said facade surface covering, the use of a flexible material, the use of said composition, the use of a cementitious material component, a method of producing a facade surface covering and a method of constructing or overcladding a building, modular building unit or any component thereof.

### Background to the invention

Facades are often installed on the surface of structures, such as buildings and modular building units. This can provide the structure with increased thermal insulation, increased weather resistance, and/or a desired appearance.

It is desirable for facades for installation on the surface of a structure to have low combustibility. Structures with facades that have low combustibility may have greater fire safety and lower risk of fire damage. Furthermore, many jurisdictions, such as the United Kingdom, have building regulations that restrict the use of building materials that do not meet particular fire safety standards. In these jurisdictions, it may be particularly desirable to provide facades meeting the specific requirements of the relevant fire safety standard.

It may also be desirable for such facades to include components that have relatively high flexibility. A facade with suitably flexible components may be easier to install and there may be a lower risk of cracking or otherwise permanently damaging the facade during transit, handling and/or installation.

It may also be desirable for such facades to include components that have relatively high adhesive properties. In the present context, 'adhesive properties' refers to the ability of a material to adhere to another material. A facade with suitably adhesive components may be easier to manufacture and/or quicker and easier to install.

It may also be desirable for such facades to be aesthetically attractive. In some cases, it is desirable for facades to mimic the appearance of other building materials, such as bricks and mortar, stone, concrete, wood and metal.

Furthermore, it may also be desirable for such facades to be relatively cheap to produce, for example by comprising relatively cheap components and/or by not requiring relatively expensive or labour-intensive methods of production. It may also be desirable for such facades to be generally quick and easy to install.

Acrylic has been used to produce facades for installation on the surface of structures and components of such facades. Acrylic is relatively cheap, flexible, has good adhesive properties, and can be used to form facades with a desired shape and colour, to give a desired appearance. However, drawbacks of this material include its relatively high combustibility/high combustion energy, and thus its low fire safety.

JP 2021-131010 discloses a building board having a good flexibility and flame retardancy and is based on the following composition: 79-89% by weight of viscous paste-like synthetic resin, 2.5-11.5% by weight of cement, 1-3% by weight of cement quick-setting admixture, 2-8% by weight of aggregate and fibers are mixed at a ratio of 0.7 to 3% by weight.

### Object of the invention

The present invention seeks to provide an improved facade surface covering that is suitable for attaching to a surface of a structure (such as, for example, a building, a modular building unit, or some component thereof, for example), and which has low combustibility, low risk of cracking or other permanent damage, and high ease of installation. The present invention also seeks to provide such a facade that may also have an attractive appearance and/or may be produced at relatively low cost.

The present invention also seeks to provide improved components of a facade surface covering that have low combustibility while achieving excellent flexibility and excellent adhesive properties. Such components may be suitable for providing a facade surface covering that has low combustibility, low risk of cracking or other permanent damage, and high ease of installation.

The present invention also seeks to provide an improved adhesive that is suitable for attaching a facade surface covering to a surface of a structure, such as a building, and which has low combustibility and excellent adhesive properties.

### Summary of the invention

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.

In particular, the present invention provides:
[1] A facade surface covering for installation on a surface of a structure, wherein the facade surface covering comprises one or more surface elements, and the surface elements comprise a flexible material comprising a flexible polymer component and a cementitious material component.
[2] A surface element for a facade surface covering, wherein the surface element comprises a flexible material as defined in [1].
[3] A filler for a facade surface covering, wherein the filler comprises a flexible material as defined in [1].
[4] A composition for producing a facade surface covering, comprising a flexible material as defined in [1] and a solvent.
[5] A building, a modular building unit or any component thereof, comprising a facade surface covering according to [1].
[6] Use of a composition as defined in [4] in the production of: a facade surface covering; one or more surface elements for a facade surface covering; or a filler for a facade surface covering.
[7] Use of a composition as defined in [4] as an adhesive for attaching a facade surface covering to a surface of a building, a modular building unit or any component thereof.
[8] A method of producing a facade surface covering for installation on a surface of a structure, comprising: (i) providing a composition as defined in [4]; and (ii) drying the composition to provide one or more surface elements.

### Detailed description of the invention

It is a finding of the present invention that a flexible material comprising a flexible polymer component and a cementitious material component has an excellent combination of properties that make it particularly well suited for forming components of facade surface coverings. In particular, the flexible material may have exceptionally low combustibility, high flexibility and excellent adhesive properties. The flexible material may have further advantages in terms of: relatively low cost of production; being suitable for producing aesthetically attractive facade surface coverings; and/or being suitable for producing facade surface coverings that are quick and easy to install.

Facade surface covering components (such as, for example, surface elements and fillers) comprising this flexible material may have exceptionally low combustibility while maintaining excellent flexibility and excellent adhesive properties, may have an attractive appearance, and may be cheap to produce. Facade surface coverings having such components may have low combustibility, low risk of cracking or other permanent damage, and high ease of installation. Said facade surface coverings may also have an attractive appearance and be relatively cheap to produce.

The excellent combination of properties of this flexible material also make it particularly well suited in an adhesive for attaching a facade surface covering to a surface of a structure, such as a building. In particular, the flexible material can be used to produce an adhesive with low combustibility and excellent adhesive properties.

The flexible polymer component contributes to the excellent flexibility of the flexible material while also providing excellent adhesive properties. The cementitious material component reduces the combustibility/combustion energy of the flexible material, while maintaining excellent adhesive properties and flexibility.

Non-cementitious inorganic materials can be included in building materials to reduce their combustibility/combustion energy, but the resulting building materials typically have poor adhesive properties and/or poor flexibility. The present invention overcomes this problem by combining a flexible polymer component and a cementitious material component to provide a flexible material with an excellent combination of low combustibility/combustion energy while achieving excellent flexibility and adhesive properties.

### The flexible material

The flexible material of the present invention comprises a flexible polymer component and a cementitious material component.

The flexible material may be prepared by drying a composition of the present invention as described below. Thus, the flexible material of the present invention may be prepared by mixing, in any order: (i) a composition comprising the flexible polymer component and a solvent; and (ii) a composition comprising the cementitious material component and a solvent; and then drying the resulting mixture.

Many suitable flexible polymer components and cementitious material components are commercially available or can be prepared using methods that are well-known in the art.

The flexible material of the present invention may have advantageously low combustibility. When the flexible material has low combustibility, a facade surface covering that comprises one or more surface elements comprising the flexible material may have advantageously low combustibility and high fire safety properties.

It is common practice to evaluate the combustibility of a building material by measuring its combustion energy, also referred to as its calorific content or its heat of combustion. In particular, the combustion energy of a material may be measured in terms of its 'Pouvoir Calorifique Supérieur' (PCS) value, which may be measured according to known standard methods such as the EN ISO 1716 standard.

The flexible material of the present invention preferably has a heat of combustion of 2.0 MJ/kg or less as measured according to the BS EN ISO 1716:2018 standard. The heat of combustion of the flexible material is more preferably 1.95 MJ/kg or less, further preferably 1.9 MJ/kg or less, even more preferably 1.85 MJ/kg or less, and even further preferably 1.80 MJ/kg. In particular, the flexible material preferably has a PCS value of 2.0 MJ/kg or less, more preferably 1.95 MJ/kg or less, further preferably 1.9 MJ/kg or less, even more preferably 1.85 MJ/kg or less, and even further preferably 1.80 MJ/kg.

The lower the heat of combustion/PCS value of a building material, the greater its fire safety. A PCS value of 2.0 MJ/kg or less indicates a building material with particularly good fire safety properties. Building materials may be awarded a fire safety classification under the EN 13501-1 standard. In some jurisdictions, such as the UK, these classifications are used to determine whether or not a building material may be used under various circumstances. The highest classification is an 'A1' rating, which indicates excellent fire safety properties. One requirement for an 'A1' rating is for the material to have a PCS value 2.0 MJ/kg or less as measured according to the EN ISO 1716 standard. It is therefore advantageous for a building material to have a PCS value of 2.0 MJ/kg or less as measured according to the EN ISO 1716 standard, for the purposes of meeting regional requirements for fire safety. It may be even more advantageous for a building material to have a PCS value of less than 1.95 MJ/kg, less than 1.9 MG/kg, less than 1.85 MJ/kg or less than 1.8 MJ/kg, as such materials may have greater fire safety and fire resistance. Materials with these low PCS values may also be easier to produce in bulk whilst ensuring that no individual sample or sub-set of the material has a PCS value of above 2.0 MJ/kg - for example, due to through natural variation, error margins in measurements, or by manufacturing error. This may enable more cost-effective manufacturing and quality control processes to be employed and/or allow fire safety standards to be satisfied more easily.

The flexible material of the present invention preferably has a fire safety and non-combustibility rating of A1 according to the EN 13501-1:2018 standard.

The flexible material of the present invention may have advantageously high flexibility. When the flexible material has high flexibility, a facade surface covering that comprises one or more surface elements comprising the flexible material may be installed with increased ease and decreased risk of cracking or other permanent damage.

One method of measuring the flexibility of a material is to bend a sample of the material until cracks are visually observed and note the angle between the surfaces of the two ends of the sample at the point at which cracks are observed. This procedure is also known as 'the bend test' and a detailed protocol for this procedure is set out in the Examples section, below.

The flexible material of the present invention preferably has a flexibility as measured by 'the bend test' of greater than 35 degrees, more preferably greater than 38 degrees, further preferably greater than 40 degrees, even more preferably greater than 42 degrees, and most preferably greater than 45 degrees. Preferably, the flexible material has a flexibility as measured by the 'bend test' of less than 70 degrees, more preferably less than 65 degrees, further preferably less than 60 degrees, even more preferably less than 58 degrees, and most preferably less than 55 degrees. For example, the flexibility may preferably be within the range of 35 to 70 degrees, more preferably 38 to 65 degrees, further preferably 40 to 60 degrees, even more preferably 42 to 58 degrees, and most preferably 45 to 55 degrees.

Preferably, the flexibility of the flexible material is such that a surface element comprising the flexible material may be elastically deformed under handling or installation of a facade surface covering comprising one or more of said surface elements without cracking or permanent damage occurring.

Typically, the greater the amount of the flexible polymer component present in the flexible material, the greater the flexibility of the flexible material. Typically, the greater the amount of the cementitious material component present in the flexible material, the lower the combustibility of the flexible material. Preferably, the amount of the flexible polymer component present in the flexible material and the amount of the cementitious material component present in the flexible material are balanced and optimised to provide a flexible material with the desired combination of flexibility and low combustibility.

Preferably, the amount of the flexible polymer component present in the flexible material and the amount of the cementitious material component present in the flexible material are such that the flexible material has a heat of combustion of 2 MJ/kg or less, more preferably 1.95 MJ/kg or less, further preferably 1.9 MJ/kg or less, and most preferably 1.85 MJ/kg or less. The flexible material then has excellent fire safety properties, as discussed above.

Preferably, the amount of the flexible polymer component present in the flexible material and the amount of the cementitious material component present in the flexible material are such that the flexible material has a non-combustibility rating of A1 according to the EN 13501-1:2018 standard. The flexible material then has excellent fire safety properties, as discussed above.

Preferably, the amount of the flexible polymer component present in the flexible material and the amount of the cementitious material component present in the flexible material are such that the flexible material has a flexibility as measured by 'the bend test' of greater than 35 degrees, more preferably greater than 38 degrees, further preferably greater than 40 degrees, even more preferably greater than 42 degrees, and most preferably greater than 45 degrees. For example, the flexibility may preferably be within the range of 35 to 70 degrees, more preferably 38 to 65 degrees, further preferably 40 to 60 degrees, even more preferably 42 to 58 degrees, and most preferably 45 to 55 degrees.

The flexible material preferably comprises the flexible polymer component and the cementitious material component in a ratio of between 3.3:1 to 1.25:1 by weight, more preferably 3:1 to 1.7:1 by weight, further preferably 2.5:1 to 1.8:1 by weight, and even more preferably 2.3:1 to 2:1. When the amounts of the flexible polymer component and the cementitious material component are within these ranges, the flexible material may have an excellent balance of high flexibility and low combustibility.

The flexible material preferably comprises the flexible polymer component in an amount of at least 55 wt% relative to the total weight of the flexible material, more preferably at least 56 wt%, further preferably at least 65 wt%, and even more preferably at least 67 wt%. For example, the flexible material may preferably comprise the flexible polymer component in an amount of 55 to 80 wt% relative to the total weight of the flexible material, more preferably 56 to 77 wt%, further preferably 65 to 75 wt%, and even more preferably 67 to 71 wt%. When the amount of the flexible polymer component is within these ranges, the flexible material may have excellent flexibility.

The flexible material preferably comprises the cementitious material component in an amount of at least 20 wt% relative to the total weight of the flexible material, more preferably at least 23 wt%, further preferably at least 25 wt%, and even more preferably at least 29 wt%. For example, the flexible material may preferably comprise the cementitious material component in an amount of 20 to 45 wt% relative to the total weight of the flexible material, more preferably 23 to 44 wt%, further preferably 25 to 35 wt%, and even more preferably 29 to 33 wt%. When the amount of the cementitious material component is within these ranges, the flexible material may have excellently low combustibility.

The flexible material may further comprise one or more materials or additives. These materials and additives may be selected from: colouring additives; inorganic fibres, preferably glass fibres; fillers; sand; and quartz.

One advantage of the flexible material of the present invention is that it can be formed into any desired shape to give a desired appearance. For example, the flexible material may be formed into a shape that mimics the appearance of other building materials, such as bricks and mortar, stone, concrete, wood and metal.

The one or more materials or additives preferably comprise at least one colouring additive, and more preferably at least two different colouring additives having different colours. This can enhance the appearance of the flexible material, for example by giving it an aesthetically pleasing colour or by enabling it to more effectively mimic the appearance of other materials.

### The flexible polymer component

The flexible polymer component of the flexible material of the present invention is a component comprising a flexible polymer compound. The flexibility and adhesive properties of the flexible polymer component allow the flexible material of the present invention to also have excellent flexibility and adhesive properties, which make it particularly suitable for producing facade surface coverings and adhesives for facade surface coverings.

Flexible polymer components are well known and commercially available. For example, commercially available flexible polymer components include acrylics media produced by Alsecco, Weber, Soltherm, Mapei and STO. The chemical structure of the flexible polymer compound is not particularly limited, so long the flexible polymer compound has the desired flexibility and adhesive properties.

Preferably, the flexible polymer component is flexible enough that the flexible material has a flexibility as measured by 'the bend test' of greater than 35 degrees, more preferably greater than 38 degrees, further preferably greater than 40 degrees, even more preferably greater than 42 degrees, and most preferably greater than 45 degrees. For example, the flexibility may preferably be within the range of 35 to 70 degrees, more preferably 38 to 65 degrees, further preferably 40 to 60 degrees, even more preferably 42 to 58 degrees, and most preferably 45 to 55 degrees.

The flexible polymer component preferably has a flexibility as measured by 'the bend test' of greater than 40 degrees, more preferably greater than 42 degrees, further preferably greater than 45 degrees, even more preferably greater than 48 degrees, and most preferably greater than 50 degrees. For example, the flexibility may preferably be within the range of 40 to 90 degrees, more preferably 42 to 85 degrees, further preferably 45 to 80 degrees, even more preferably 48 to 75 degrees, and most preferably 50 to 70 degrees. When the flexibility of the flexible polymer component is within such ranges, the flexible material may have excellently high flexibility.

The flexible polymer component preferably comprises a polymer compound containing one or more constitutional units derived from an acrylic or acrylate compound. An acrylic compound is an optionally substituted acrylic acid compound. An acrylate compound is a salt, ester or conjugate base of an optionally substituted acrylic acid compound. Preferably, the acrylic or acrylate compound is an acrylate ester compound. An acrylate ester compound is an ester of an optionally substituted acrylic acid compound. Preferably, the acrylate ester compound is a methacrylate ester compound - that is, an acrylate ester compound substituted with a methyl group at the 2- position of the propenoate moeity. Preferably, the methacrylate ester compound is methyl methacrylate or ethyl methacrylate, more preferably methyl methacrylate.

Preferably, the amount of constitutional units derived from an acrylic or acrylate compound is at least 50 mol% of all constitutional units present in the polymer compound, more preferably at least 60 mol%, further preferably at least 70 mol%, even more preferably at least 80 mol%, even more further preferably at least 90 mol% and most preferably at least 95 mol%.

Preferably, the polymer compound is an acrylate ester homopolymer. An acrylate ester homopolymer is a polymer compound consisting of constitutional units derived from an optionally substituted acrylate ester compound. Preferably, the acrylate ester homopolymer is a methacrylate ester homopolymer. A methacrylate ester homopolymer is a polymer compound consisting of constitutional units derived from an acrylate ester compound substituted with a methyl group at the 2- position of the propenoate moiety. Preferably, the methacrylate ester homopolymer is an ethyl or methyl methacrylate ester homopolymer, more preferably a methyl methacrylate ester homopolymer.

Preferably, the polymer compound is polymethyl methacrylate.

Alternatively, the constitutional unit derived from an acrylic or acrylate compound is preferably a constitutional unit of formula (I):

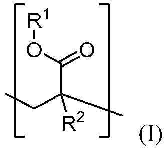

R¹ is selected from: hydrogen, an optionally substituted C₁ to C₆ alkyl group, an optionally substituted cyclopentyl or cyclohexyl group, an optionally substituted phenyl group, an optionally substituted 5- or 6- membered heteroaryl ring, an optionally substituted 5- or 6- membered saturated or partially unsaturated heterocyclyl group, - C(O)OR^{a}, -C(O)NR^{a}R^{a} and -C(O)R^{b}. Each R^{a} is independently selected from hydrogen and an optionally substituted C₁ to C₄ alkyl group.

Preferably, R¹ is selected from: hydrogen, an optionally substituted C₁ to C₄ alkyl group, an optionally substituted cyclopentyl or cyclohexyl group and an optionally substituted phenyl group. More preferably, R¹ is selected from hydrogen and an optionally substituted C₁ to C₄ alkyl group. Further preferably, R¹ is hydrogen or an unsubstituted C₁ to C₄ alkyl group. Even more preferably, R¹ is methyl or ethyl. Most preferably, R¹ is methyl.

R² is selected from: hydrogen, an optionally substituted C₁ to C₄ alkyl group, -OR^{a}, -SR^{a}, -NR^{a}R^{a}, -C(O)OR^{a}, -C(O)NR^{a}R^{a}, -C(O)R^{a}, -OC(O)R^{a} and -NHC(O)R^{a}. Each R^{a} is independently selected from hydrogen and an optionally substituted C₁ to C₄ alkyl group.

Preferably, R² is selected from: hydrogen, an optionally substituted C₁ to C₄ alkyl group, -OR^{a}, -NR^{a}R^{a} and -C(O)OR^{a}. More preferably, R² is selected from hydrogen and an optionally substituted C₁ to C₄ alkyl group. Further preferably, R² is an unsubstituted C₁ to C₄ alkyl group or hydrogen. Even more preferably, R² is methyl, ethyl or hydrogen. Most preferably, R² is methyl.

When the polymer compound has a chemical structure as set out above, the flexible polymer component and the flexible material may have excellently high flexibility.

As used herein, an alkyl group can be linear or branched but is preferably linear. A C₁ to C₆ alkyl group is a linear or branched alkyl group containing from 1 to 6 carbon atoms, not including any carbon atoms present in any substituents present on the C₁ to C₆ alkyl group. A C₁ to C₆ alkyl group is typically a C₁ to C₄ alkyl group such as methyl, ethyl, n-propyl, i-propyl, n-butyl, sec-butyl and tert-butyl. A C₁ to C₄ alkyl group is preferably a C₁ to C₃ alkyl group, more preferably ethyl or methyl and most preferably methyl. Unless otherwise specified, an alkyl group can be unsubstituted or substituted as described herein. For the avoidance of doubt, where two alkyl groups are present, the alkyl groups may be the same or different.

As used herein, a halogen is typically chlorine, fluorine, bromine or iodine, and is preferably chlorine, fluorine or bromine, more preferably chlorine or fluorine.

As used herein, a 5- or 6- membered heteroaryl group is a 5- or 6-membered ring system in which the ring is fully unsaturated and aromatic and contains at least one heteroatom. Typically, the ring contains up to three or four heteroatoms, e.g. one or two heteroatoms, selected from O, N and S. Thus, a 5- or 6-membered heteroaryl group is typically a 5- or 6- membered aromatic ring containing one, two or three heteroatoms selected from O, N and S. Preferably, the heteroatoms are selected from O and N. Suitable such heteroaryl groups include, for example, furanyl, pyrrolyl, pyrazolyl, imidazolyl, triazolyl, tetrazolyl, oxazolyl, isoxazolyl, oxadiazolyl, thiazolyl, isothiazolyl, thiadiazolyl, pyridinyl, pyradazinyl, pyrimidinyl, pyrazinyl, triazinyl and thiophenyl. Preferably, the 5- or 6-membered heteroaryl group is selected from furanyl, pyrrolyl, pyrazolyl, imidazolyl, triazolyl, oxazolyl, isoxazolyl, pyridinyl, pyradazinyl, pyrimidinyl and pyrazinyl.

As used herein, a 5- to 6- membered saturated heterocyclic group is a saturated 5- or 6-membered ring system in which the ring contains at least one heteroatom. Typically, the ring contains up to three or four heteroatoms, e.g. one or two heteroatoms, selected from O, S and N. Thus, a 5- or 6-membered saturated heterocyclic group is typically a 5- or 6-membered ring containing one, two or three heteroatoms selected from O, S and N. Suitable such saturated heterocyclic groups include, for example, tetrahydrofuranyl, piperidinyl, oxazolidinyl, morpholinyl, thiomorpholinyl, pyrrolidinyl, dioxolanyl, piperidonyl, piperazinyl and tetrahydropyranyl, more preferably pyrrolidinyl, morpholinyl, piperazinyl, tetrahydropyranyl and piperidinyl.

As used herein, a 5- or 6-membered partially unsaturated heterocyclic group is a 5- or 6-membered ring system in which the ring contains at least one unsaturated bond and at least one heteroatom, but the ring is not fully unsaturated or aromatic. Typically, the ring contains up to three or four heteroatoms, e.g. one or two heteroatoms, selected from O, N and S. Thus, a 5- or 6-membered partially unsaturated heterocyclic group is typically a 5- or 6-membered ring containing one, two or three heteroatoms selected from O, N and S. Preferably, the heteroatoms are selected from O and N. Suitable such partially unsaturated heterocyclic groups include, for example, dihydrofuranyl, pyranyl, dihydropyranyl, dioxinyl, pyrrolinyl, pyrazolinyl, imidazolinyl, dihydrooxazolyl, dihydroisoxazolyl, dihydrothiazolyl, dihydroisothiazolyl, dihydropyridinyl, tetrahydropyridinyl, dihydropyridazinyl, tetrahydropyridazinyl, dihydropyrimidinyl, tetrahydropyrimidinyl, dihydropyrazinyl, tetrahydropyrazinyl, oxazinyl, dihydrooxazinyl, thiazinyl, dihydrothiazinyl, dihydrothiophenyl, thiopyranyl and dihydrothiopyranyl, preferably dihydrofuranyl, pyranyl, pyrrolinyl and oxazinyl.

A heterocyclic and/or heteroaryl group may be substituted or unsubstituted. Each ring atom may be unsubstituted or may carry one or two substituents. A nitrogen atom may be disubstituted, providing a positively charged heteroatom. A sulphur atom may be substituted, providing a positively charged heteroatom. Typically, a heterocyclic or heteroaryl group has up to three substituents, e.g. one or two substituents. The heterocyclic or heteroaryl ring may be connected to the remainder of the molecule by a bond to any of the available ring positions on the heterocyclic or heteroaryl ring.

As used herein and unless specified otherwise, a group which is optionally substituted may be substituted with suitable substituents, each of which may be a C₁ to C₄ alkyl group such as methyl or ethyl, a halogen such as chlorine or fluorine, a cyano groups (i.e. -CN), -OR^{x}, -SR^{x}, -NR^{x}R^{x}, -C(O)OR^{x}, -C(O)NR^{x}R^{x} or -C(O)R^{x}. A C₁ to C₄ alkyl group substituent is itself either unsubstituted or substituted with 1 to 3 halogen atoms. Each R^{x} is independently selected from hydrogen and a C₁ to C₄ alkyl group which is unsubstituted or is substituted with 1, 2 or 3 halogen groups. An optional substituent is preferably an unsubstituted C₁ to C₄ alkyl group such as methyl or ethyl, a hydroxyl group or a halogen such as chlorine or fluorine.

Unless otherwise specified, included in the above are the well known ionic, salt, solvate, and protected forms of these substituents. For example, a reference to carboxylic acid, carboxy or carboxyl group (-C(O)OH) also includes the anionic (carboxylate) form (-C(O)O⁻), a salt or solvate thereof, as well as conventional protected forms. Similarly, a reference to an amino group (-NR¹R²) includes the protonated form (-N⁺HR¹R²), a salt or solvate of the amino group, for example, a hydrochloride salt, as well as conventional protected forms of an amino group. Similarly, a reference to a hydroxy or hydroxyl group (-OH) also includes the anionic form (-O⁻), a salt or solvate thereof, as well as conventional protected forms. Salts include salts formed with acids and bases. Suitable acids include both inorganic acids such as hydrochloric, sulphuric, phosphoric, diphosphoric, hydrobromic or nitric acid and organic acids such as oxalic, citric, fumaric, maleic, malic, ascorbic, succinic, tartaric, benzoic, acetic, methanesulphonic, ethanesulphonic, benzenesulphonic or *p*-toluenesulphonic acid. Suitable bases include alkali metal (e.g. sodium or potassium) and alkali earth metal (e.g. calcium or magnesium) hydroxides and organic bases such as alkyl amines, aralkyl amines and heterocyclic amines. Hydrochloride salts and acetate salts are preferred, in particular hydrochloride salts. When intended for use in pharmaceutical applications, salts of the compounds provided herein may be preferably pharmaceutically acceptable salts.

In addition to the flexible polymer compound, the flexible polymer component may further comprise one or more supplementary components selected from inorganic fibres, preferably glass fibres; fillers; sand; quartz; and/or other aggregates.

The flexible polymer component preferably comprises the flexible polymer compound in an amount of at least 35 wt% relative to the total weight of the flexible polymer component, more preferably at least 38 wt%, further preferably at least 41 wt%, and even more preferably at least 44 wt%. For example, the flexible polymer component may preferably comprise the flexible polymer compound in an amount of 35 to 61 wt% relative to the total weight of the flexible polymer component, more preferably 38 to 58 wt%, further preferably 41 to 55 wt%, and even more preferably 44 to 52 wt%. When the amount of the flexible polymer compound is within these ranges, the resulting flexible material may have non-combustibility characteristics and advantageous flexibility.

The flexible polymer component preferably comprises one or more supplementary components selected from inorganic fibres, preferably glass fibres; fillers; sand; quartz; and/or other aggregates in an amount of at least 38 wt% relative to the total weight of the flexible polymer component, more preferably at least 41 wt%, further preferably at least 44 wt%, and even more preferably at least 47 wt%. For example, the flexible polymer component may preferably comprise one or more supplementary components in an amount of 38 to 64 wt% relative to the total weight of the flexible polymer component, more preferably 41 to 61 wt%, further preferably 44 to 58 wt%, and even more preferably 47 to 55 wt%. When the amount of the supplementary components is within these ranges, the resulting flexible material may have non-combustibility characteristics and advantageous flexibility.

### The cementitious material component

The cementitious material component of the flexible material of the present invention is a component comprising one or more cementitious materials. The combination of low combustibility and excellent adhesive properties of the cementitious material component allow the flexible material of the present invention to also have an excellent combination of low combustibility and excellent adhesive properties. This makes the flexible material particularly suitable for producing facade surface coverings and adhesives for facade surface coverings.

Cementitious materials are well known and commercially available. For example, commercially available cementitious materials include cementitious media produced by Hanson, Blue Circle, Everbuild, Soltherm, K Systems, Weber and STO. The cementitious material component may contain a wide range of different components, so long as the desired cementitious properties are achieved. However, cementitious materials typically include ingredients such as limestone, clay, ground shell particulates and silica sand. The cementitious material of the present invention is not particularly limited, so long as it has the binding and setting behaviour typical of cementitious materials. For example, the cementitious material of the present invention may comprise any of the typical ingredients known to be used in the production of cementitious materials such as cement.

Preferably, the cementitious material component comprises fine aggregates of inorganic material.

More preferably, the cementitious material component comprises one or more materials selected from: cement, hydraulic cement, Portland cement, concrete, mortar, limestone, lime, hydrated lime, clay, ground shells, sand, silica sand, and gravel. Further preferably, the cementitious material component comprises one or more materials selected from calcined lime, calcined clay and sand.

Additives for cementitious materials are well-known. The cementitious material component of the present invention may contain any additives typically used in the production of cementitious materials such as cement. For example, the cementitious material component of the present invention may comprise one or more additives selected from: binders, surfactants, polymer compounds and cellulose derivatives.

Cementitious material components with a composition as discussed above may have excellently low combustibility and excellent adhesive properties.

### The facade surface covering

The facade surface covering of the present invention is a facade surface covering suitable for installation on a surface of a structure, such as a building, a modular building unit or any component thereof. The facade surface covering comprises one or more surface elements. The one or more surface elements comprise the flexible material of the present invention, as defined above.

In one embodiment, the one or more surface elements is a single surface element. In another embodiment, the one or more surface elements is a plurality of surface elements.

The facade surface covering may comprise a supporting layer. The one or more surface elements of the facade surface covering may be connected to the supporting layer. Preferably, the supporting layer comprises a flexible mesh and/or a calcium silicate board, and more preferably the supporting layer comprises a flexible mesh. Preferably, the flexible mesh is embedded within the one or more surface elements. When the supporting layer is a flexible mesh, the facade surface covering may have high flexibility, high ease of installation and reduced risk of cracking or other permanent damage.

As discussed above, one advantage of the flexible material of the present invention is that it may be formed into any desired shape. Thus, the one or more surface elements of the facade surface covering may have a range of different sizes, shapes and designs, according to the desired appearance of the facade surface covering. When there is more than one surface element, the surface elements may have the same shape and design or may have different shapes and designs. The shape and design of each of the surface elements is thus not particularly limited. In some embodiments, the shape and design of the surface elements may mimic the appearance of other building materials, such as bricks and mortar, stone, concrete, wood and metal.

As also discussed above, the flexible material may comprise colouring additives. Monotone facade surface coverings can look bland, unnatural or unrealistic. To address this problem, in one embodiment the facade surface covering of the present invention may comprise more than one surface element, wherein at least one of the surface elements comprises a colouring additive with a particular colour and at least one other surface element comprises a different colouring additive having a different colour. In another embodiment, the facade surface covering of the present invention may comprise more than one surface element, wherein at least one of the surface elements comprises a colouring additive with a particular colour and at least one other surface element does not comprise a colouring additive. These embodiments may have an enhanced appearance, for example by having a more interesting appearance or by more effectively mimicking the appearance of other materials.

The one or more surface elements may comprise additional materials to influence their physical properties and/or their appearance. For example, the one or more surface elements may comprise a coating of surface finish powder to provide a desired appearance. In one embodiment, one or more surface elements comprise a coating of surface finish powder wherein the surface finish powder is brick dust. This gives the surface element the visual appearance of brick material.

For example, in one embodiment the facade surface covering may comprise a plurality of surface elements comprising a colouring additive giving them a brick-like colour and/or a coating of brick dust. In this embodiment, the plurality of surface elements may be formed into the shape of traditional bricks and mimic the appearance of traditional bricks.

In one embodiment, the facade surface covering comprises a plurality of surface elements and further comprises a filler provided between adjacent surface elements. The filler preferably also comprises a flexible material of the present invention, as defined above. The flexible material in the plurality of the surface elements may be the same or different to the flexible material in the filler, subject to the surface elements and/or the filler optionally comprising different colouring additives. Preferably, the surface elements and the filler are made from the same material, subject to the surface elements and/or the filler optionally comprising different colouring additives. This embodiment may mimic the appearance of, for example, a traditional brick and mortar wall, by virtue of the plurality of surface elements resembling bricks and the filler resembling pointing.

When the facade surface covering comprises a supporting layer and a filler, the filler is preferably connected to the supporting layer. In one embodiment, the facade surface covering comprises a supporting layer, a plurality of surface elements connected to the supporting layer, and a filler provided between adjacent surface elements and connected to the supporting layer.

The overall shape of the facade surface covering is not particularly limited. The facade surface covering may be substantially flat, such that it is suitable for installation on a flat surface of a structure such as a building. Alternatively, the facade surface covering may include one or more bends, such that it is suitable for installation on a corner where two or more surfaces of a structure such as a building meet.

The facade surface covering may comprise a tessellating shape, such that when a plurality of the facade surface coverings are installed adjacent to one another, the one or more surface elements from a first of the facade surface coverings interlock with the one or more surface elements from a second of the facade surface coverings.

The installation of adjacent facade surface coverings may be such that both of the facade surface coverings are installed onto the same substantially flat surface, such that the installed facade surface coverings are on substantially the same plane. Alternatively, the installation of adjacent facade surface coverings may be such that the facade surface coverings are not installed onto the same substantially flat surface. For example, the facade surface coverings may be installed on a structure at a corner where two or more surfaces of the structure meet, such that the two facade surface coverings are installed adjacent to one another and form a 'corner assembly'.

In such a 'corner assembly', the first facade surface covering may be installed on a first surface and the second facade surface covering may be installed on a second surface such that the first facade surface covering and the second facade surface covering are adjacent to one another but on different planes, and the one or more surface elements from the first facade surface covering interlock with the one or more surface elements from the second the facade surface coverings.

As noted, in such a 'corner assembly', the first facade surface covering and the second facade surface covering are installed adjacent to one another but on different planes. The angle between these two planes is not particularly limited. For example, the angle between the two planes may be in the range of 45 to 160 degrees, or may be in the range of 80 to 100 degrees.

Thus, the facade surface covering may comprise a tessalating shape such that when a plurality of the facade surface coverings are installed adjacent to one another onto the same substantially flat surface, the one or more surface elements from a first of the facade surface coverings interlock with the one or more surface elements from a second of the facade surface coverings.

The facade surface covering may comprise a tessalating shape such that when a plurality of the facade surface coverings are installed adjacent to one another at a corner where two or more surfaces meet, such that a first of the facade surface coverings is installed onto a first surface and a second of the facade surface coverings is installed onto a second surface, the one or more surface elements from the first facade surface covering interlock with the one or more surface elements from the second facade surface covering.

When the facade surface covering is designed to mimic the appearance of a traditional brick and mortar wall, a tessalating shape as defined above can enhance the appearance of the facade surface covering by more effectively mimicking a traditional brick and mortar wall. In particular, the surface elements may resemble bricks and the interlocking of surface elements from adjacent facade surface coverings can effectively and seamlessly mimic the arrangement of bricks in a traditional brick and mortar wall.

When the facade surface covering comprises a tessalating shape and a filler, the filler is preferably provided on an edge of the prefabricated facade surface covering and omitted from an opposing edge of the prefabricated facade surface covering, such that when the plurality of prefabricated facade surface coverings are installed adjacent to one another, filler is provided between adjacent surface elements of adjacent prefabricated facade surface coverings.

The facade surface covering may have a thickness of less than about 10 mm, preferably less than about 9 mm, further preferably less than about 8 mm, and even more preferably less than about 7 mm. When the thickness of the facade surface covering meets these values, the facade surface covering may have an advantageous combination of thermal insulation, weather resistance, non-combustibility and flexibility, while retaining low weight and minimising the quantity of material required to produce the facade covering.

### The surface element and the filler

The present invention also provides a surface element for a facade surface covering. This surface element has the same properties and preferred features as the one or more surface elements present in the facade surface covering of the present invention, as described above. Thus, the surface element of the present invention comprises the flexible material of the present invention. Thus, the flexible material present in the surface element of the present invention has the same properties and preferred features as described above in relation to the flexible material of the present invention.

The surface element of the present invention may be prepared by shaping a composition of the present invention, as described below, into a desired shape and drying the composition. Alternatively, the surface element of the present invention may be prepared by shaping the flexible material of the present invention, for example by cutting the flexible material of the present invention into the desired shape.

As the surface element of the present invention comprises the flexible material of the present invention, the surface element may have excellently high flexibility and low combustibility and is therefore particularly well suited as a surface element of a facade surface covering. A facade surface covering comprising one or more such surface elements may have low combustibility, high ease of installation and reduced risk of cracking or other permanent damage.

The present invention also provides a filler for a facade surface covering comprising the flexible material of the present invention. Thus, the flexible material present in the filler of the present invention has the same properties and preferred features as described above in relation to the flexible material of the present invention.

The filler of the present invention may be prepared by applying a composition of the present invention to a facade surface covering and drying the composition. The composition may be applied to the facade surface covering using filler stencil and/or may be shaped using a tool, as discussed below in relation to methods of the present invention.

As the filler of the present invention comprises the flexible material of the present invention, the filler may have excellently high flexibility and low combustibility and is therefore particularly well suited as a filler for application on or as part of a facade surface covering. A facade surface covering comprising such a filler may have low combustibility, high ease of installation and reduced risk of cracking or other permanent damage.

### The composition

The present invention also provides a composition for producing a facade surface covering. The composition comprises the flexible material of the present invention and a solvent. Thus, the composition comprises a flexible polymer component as defined above and a cementitious material component as defined above. The amounts and ratios of the flexible polymer component and the cementitious material component may correspond to those defined above for the flexible material of the present invention. The flexible material present in the composition of the present invention has the same properties and preferred features as described above in relation to the flexible material of the present invention.

The solvent is not particularly limited. Suitable solvents are well known and commercially available. The solvent may comprise one or more solvents. Preferably, the solvent is selected such that the composition of the present invention is free-flowing. For example, the solvent may be water.

The amount of the solvent present in the composition is not particularly limited. Preferably, the amount of the solvent is such that the composition of the present invention is free-flowing. For example, the amount of the solvent in the composition may be 1 to 50 wt% relative to the total weight of the composition, preferably 5 to 40 wt%, more preferably 10 to 30 wt% and further preferably 15 to 25 wt%.

The composition of the present invention may be prepared by mixing, in any order: (i) a composition comprising the flexible polymer component and a solvent; and (ii) a composition comprising the cementitious material component and a solvent. The solvent in the composition comprising the flexible polymer component and the solvent in the composition comprising the cementitious material component may be the same or different. Preferably, the solvents are the same. More preferably, the solvents are both water.

As the composition of the present invention comprises the flexible material of the present invention, the composition may be used to produce a flexible material having an excellent combination of high flexibility and low combustibility. The composition is therefore particularly well suited for producing facade surface coverings or elements thereof such as surface elements and/or filler.

The composition of the present invention also has excellent adhesive properties in addition to low combustibility, and is therefore particularly well suited for use as an adhesive in the building industry, for example as an adhesive in the installation of facade surface coverings such as the facade surface coverings of the present invention.

### The building, modular building unit, or any component thereof

The present invention also provides: a building comprising a facade surface covering of the present invention; a modular building unit comprising a facade surface covering of the present invention; and any component of a building or a modular building unit comprising a facade surface covering of the present invention.

The facade surface covering of the present invention is particularly suitable as a component of a building, a modular building unit, or any component thereof, due to its combination of low combustibility, high ease of installation and low risk of cracking or other permanent damage.

Preferably, the facade surface covering is attached to a surface of the building, modular building unit or any component thereof. The surface of the building, modular building unit or any component thereof is preferably an exterior surface of the building, modular building unit or any component thereof. This is because the facade surface covering may provide excellent weatherability and an attractive appearance when attached to a surface - particularly, an exterior surface - of the building, modular building unit or any component thereof.

The facade surface covering may be attached to the building, modular building unit or any component thereof by any means, including mechanical means such as attaching the facade surface covering using screws, nails or interlocking parts. Preferably, for example for a facade surface covering formed with a mesh supporting layer, the facade surface covering is attached to the building, modular building unit or any component thereof using an adhesive.

The adhesive preferably comprises the composition of the present invention as described above. Such an adhesive adheres particularly well to the facade surface covering of the present invention. Furthermore, the composition of the present invention has low combustibility and excellent adhesive properties, which make the composition particularly suitable for use as a building material and as an adhesive for use in building construction. Using an adhesive that comprises the composition of the present invention may enable quick and easy installation of the facade surface covering of the present invention onto the building, modular building unit or any component thereof.

In embodiments where the facade surface covering comprises a filler and the filler comprises the composition of the present invention, it is preferably that the adhesive and the filler are formed from the same composition of the present invention. This may increase the ease of installation of the facade surface covering.

### Uses

The present disclosure also provides the use of a flexible material as defined above in: a facade surface covering; one or more surface elements for a facade surface covering; a filler for a facade surface covering; or an adhesive for attaching a facade surface covering to a surface of a building, a modular building unit or any component thereof.

The present invention also provides the use of a composition as defined above in the production of: a facade surface covering; one or more surface elements for a facade surface covering; a filler for a facade surface covering.

The present invention also provides the use of a composition as defined above as an adhesive for attaching a facade surface covering to a surface of a building, a modular building unit or any component thereof.

The flexible material of the present invention is particularly well suited for use in an element of a facade surface covering such as a surface element or a filler. The resulting element may have excellent high flexibility and low combustibility, and may therefore be particularly suitable as a component of a facade surface covering. A facade surface covering comprising the flexible material (for example, a facade surface covering comprising an element that comprises the flexible material) may have excellent low combustibility, high ease of installation and reduced risk of cracking or other permanent damage.

Similarly, the composition of the present invention is particularly well suited for use in the production of a facade surface covering or an element thereof such as a surface element or a filler because the resulting facade surface covering or element thereof comprises the flexible material of the present invention and thus may have the advantages set out above.

The flexible material of the present invention also has particularly good adhesive properties. The combination of excellent adhesive properties, high flexibility and low combustibility make the flexible material of the present invention particularly well suited for use in an adhesive for attaching a facade surface covering to a surface of a building, a modular building unit or any component thereof.

Similarly, the composition of the present invention also has particularly good adhesive properties and can dry into a material with high flexibility and low combustibility. The composition of the present invention therefore also particularly well suited for use in an adhesive for attaching a facade surface covering to a surface of a building, a modular building unit or any component thereof.

The present disclosure also provides the use of a cementitious material component as defined above in a composition for producing a facade surface covering, to decrease the heat of combustion of the resulting facade surface covering.

Adding a cementitious material component as defined above to a composition may decrease the combustibility of the composition by decreasing the heat of combustion of the composition. The composition may then be used to produce a building material, such as a facade surface covering, that has reduced combustibility and thus increased fire safety.

As discussed above, non-cementitious inorganic materials may be included in building materials with the purpose of reducing their combustibility and combustion energy, but the resulting building materials typically have poor adhesive properties and/or poor flexibility. The cementitious material component used in the present invention is advantageously and surprisingly able to reduce the combustibility of a building material while maintaining excellent flexibility and adhesive properties.

Thus, the use of the cementitious material component of the present disclosure in a composition for producing a facade surface covering may enable the production of a facade surface covering with decreased combustibility that has elements with excellent flexibility and adhesive properties. This facade surface covering may have high ease of installation and reduced risk of cracking or other permanent damage.

### Methods

The present invention also provides a method of producing a facade surface covering, wherein the facade surface covering is suitable for installation on a surface of a structure, such as a building.

The method comprises:
(i) providing a composition of the present invention as defined above; and
(ii) drying the composition to provide one or more surface elements.

This method may produce a facade surface covering with low combustibility, high ease of installation and low risk of cracking or other permanent damage.

The method preferably further comprises a step of providing a supporting layer. Preferably, the supporting layer is a flexible mesh or a calcium silicate board, more preferably a flexible mesh. When the supporting layer is a flexible mesh, the facade surface covering may have excellent flexibility. Preferably, when the method comprises a a step of providing a supporting layer, the method also further comprises applying the composition onto the supporting layer and drying the composition to provide one or more surface elements connected to the supporting layer. When the supporting layer is a flexible mesh, the step of drying the composition preferably provides one or more surface elements in which the flexible mesh is embedded.

Preferably, the method further comprises a step of providing a filler between adjacent surface elements. Preferably, the filler is a filler of the present invention as defined above. The surface elements and the filler are preferably made from the same material, subject to the surface elements and/or the filler optionally comprising different colouring additives. Where the method comprises providing a supporting layer, the filler is preferably connected to the supporting layer. When the method comprises providing a filler between adjacent surface elements, the resulting facade surface covering may mimic the appearance of, for example, a traditional brick and mortar wall, by virtue of the plurality of surface elements resembling bricks and the filler resembling pointing.

The method may further comprise contacting the composition with a tool or object to impart a surface texture. For example, the tool may be a flat sheet which is pressed or slapped against the surface of the surface element material. The surface element material may briefly adhere to the flat sheet, and as the sheet is removed from the surface, an uneven and natural texture may be imparted to the surface of the surface elements. In another example, the tool may have a specific texture intended to impart a desired texture to the surface of the surface elements. In a further example, the method may comprise contacting the composition with a tool to shape the composition into the appearance of pointing as used in traditional brick and mortar walls. This step may advantageously improve the appearance of the resulting facade surface covering, for example by allowing it to more effectively mimic another building material such as traditional bricks and mortar.

In one embodiment, the method comprises a step of providing the plurality of surface elements connected to the supporting layer, and this step comprises: providing a surface element stencil onto the supporting layer, the surface element stencil comprising openings defining the plurality of surface elements to be formed on the supporting layer; and providing a surface element material onto the supporting layer through the openings of the surface element stencil. Preferably, the step of providing the surface element material onto the supporting layer through the openings of the surface element stencil comprises: providing an applicator arranged to supply the surface element material across a width of the surface element stencil; moving the supporting layer and the surface element stencil together relative to the applicator, while supplying the surface element material; and providing a blade adjacent to the applicator arranged to remove excess surface element material.

The method of the present invention may further comprise providing a colouring layer material onto one or more of the surface elements, the colouring layer material being made from the same material as the surface elements material but having a different colour from the surface element material.

The method of the present invention may further comprise distributing a surface finish powder across the surface element material, or colouring layer material where provided, of one or more of the surface elements. The surface finish powder may be brick dust. This method may further comprise pressing the surface finish powder into the surface element material, or colouring layer material where provided, to embed the surface finish powder into the surface element material or colouring layer material.

When the method comprises the steps of providing a supporting layer and providing a filler between adjacent surface elements, this method may further comprise, before providing the filler between adjacent surface elements, hardening the surface element material, and the colouring layer material where provided, to form the plurality of surface elements connected to the supporting layer.

When the method comprises the steps of providing a supporting layer and providing a filler between adjacent surface elements, these steps may themselves comprise: providing a filler stencil onto the supporting layer, the filler stencil comprising openings corresponding to gaps between the surface elements at which the filler is to be formed between adjacent surface elements on the supporting layer; and providing a filler material onto the supporting layer through the openings of the filler stencil. The openings of the filler stencil may be narrower than the gaps between the surface elements. The step of providing the filler material onto the supporting layer through the openings of the filler stencil may comprise: providing an applicator arranged to supply the filler material across a width of the filler stencil; moving the supporting panel and the filler stencil together relative to the applicator, while supplying the filler material; and providing a blade adjacent to the applicator arranged to remove excess filler material. After providing the filler material onto the supporting panel, a shape may be applied to the exposed surface of the filler material. Applying a shape to the exposed surface of the filler material may be performed by moving a manual shaping tool along the surface of each line of the filler material between adjacent surface elements. Alternatively, applying a shape to the exposed surface of the filler material may be performed by pressing a filler material shaping tool into the filler material, the filler material shaping tool having a configuration corresponding to a plurality of gaps between a plurality of adjacent surface elements, and a desired finished shape of the surface of the filler material. Before the step of pressing the filler material shaping tool into the filler material, a release layer may be provided between the filler material and the filler material shaping tool.

The present disclosure also provides a method of constructing or overcladding a building, modular building unit or any component thereof. This method comprises:
(i) providing one or more facade surface coverings of the present invention, as defined above, or preparing one or more facade surface coverings using the method of producing a facade surface covering of the present invention, as defined above; and
(ii) connecting the one or more facade surface coverings to the building, modular building unit or any component thereof.

Preferably, the step of connecting the one or more facade surface coverings comprises using an adhesive. More preferably, the adhesive comprises the composition of the present invention as defined above. The composition of the present invention has excellent adhesive properties. Even more preferably, the adhesive is formed from the same material as the one or more surface elements of the facade surface covering and/or, where provided, the filler of the facade surface covering. This may increase the ease of performing the method.

### Examples

The following are Examples that illustrate the present invention. However, these Examples are in no way intended to limit the scope of the invention.

### Procedure for measuring flexibility of a material

A sample surface element, or 'slip', of the material is prepared with dimensions of 215 by 65 mm. The slip is placed on a flat surface with an abrupt edge, such as a table. The slip is moved such that the half (102.5 mm) of the slip extends lengthways beyond the edge of the flat surface, ensuring that the other half (102.5 mm) of the slip remains in contact with the flat surface. Pressure is applied to the overhanging half of the slip and gradually increased until cracks can be visually observed in the slip. The angle between the surfaces of the two ends of the slip at the point at which cracks are first visually observed is measured. This procedure is also known as 'the bend test'.

### Production of flexible materials

Example compositions were produced by mixing an aqueous composition of the flexible polymer component with an aqueous composition of the cementitious material component in the ratios set out in Table 1, below.

**Table 1**

| | Aqueous composition of the flexible polymer component | Aqueous composition of the cementitious material component |
|---|---|---|
| Example composition 1 | 1.0 kg (77 wt%) | 0.30 kg (23 wt%) |
| Example composition 2 | 1.0 kg (71 wt%) | 0.40 kg (29 wt%) |
| Example composition 3 | 1.0 kg (69 wt%) | 0.44 kg (31 wt%) |
| Example composition 4 | 1.0 kg (68 wt%) | 0.47 kg (32 wt%) |
| Example composition 5 | 1.0 kg (67 wt%) | 0.50 kg (33 wt%) |
| Example composition 6 | 1.0 kg (65 wt%) | 0.55 kg (35 wt%) |
| Example composition 7 | 1.0 kg (63 wt%) | 0.60 kg (38 wt%) |
| Example composition 8 | 1.0 kg (59 wt%) | 0.70 kg (41 wt%) |
| Example composition 9 | 1.0 kg (56 wt%) | 0.80 kg (44 wt%) |

In these example compositions, commercially available Soltherm DA-P was used to provide the aqueous composition of the flexible polymer component. Upon drying, this aqueous composition loses 15% of its mass by weight, such that the amount of flexible polymer component present in the aqueous composition is approximately 85 wt%.

In these example compositions, commercially available K Rend HP12 Base was used to provide the aqueous composition of the cementitious material component. Upon drying, this aqueous composition loses 17% of its mass by weight, such that the amount of cementitious material component present in the aqueous composition is 83 wt%.

Each of the example compositions set out above were then dried to produce a flexible material. After drying, these example flexible materials contained the flexible polymer component and the cementitious material component in the ratios set out in Table 2, below.

**Table 2**

| | Flexible polymer component | Cementitious material component |
|---|---|---|
| Example material 1 | 0.85 kg (77 wt%) | 0.25 kg (23 wt%) |
| Example material 2 | 0.85 kg (72 wt%) | 0.33 kg (28 wt%) |
| Example material 3 | 0.85 kg (70 wt%) | 0.37 kg (30 wt%) |
| Example material 4 | 0.85 kg (69 wt%) | 0.39 kg (31 wt%) |
| Example material 5 | 0.85 kg (67 wt%) | 0.42 kg (33 wt%) |
| Example material 6 | 0.85 kg (65 wt%) | 0.46 kg (35 wt%) |
| Example material 7 | 0.85 kg (63 wt%) | 0.50 kg (37 wt%) |
| Example material 8 | 0.85 kg (59 wt%) | 0.58 kg (41 wt%) |
| Example material 9 | 0.85 kg (56 wt%) | 0.66 kg (44 wt%) |

### Combustion energy

The PCS value of Soltherm DA-P is known to be 2.7 MJ/kg and the PCS value of K Rend HP12 Base is known to be 0.3082 MJ/kg. Based on these values and the amounts of Soltherm DA-P and K Rend HP12 Base used to produce the example materials, predicted PCS values for example materials 1 to 6 were calculated. The actual PCS values of example materials 1 to 6 were then measured in accordance with the BS EN ISO 1716:2018 standard. The predicted PCS values and the measured PCS values of these materials are set out in Table 3, below.

**Table 3**

| | Calculated predicted PCS value (MJ/kg) | Actual measured PCS value (MJ/kg) |
|---|---|---|
| Example material 1 | 2.15 | 2.07 |
| Example material 2 | 2.02 | 1.94 |
| Example material 3 | 1.97 | 1.87 |
| Example material 4 | 1.94 | 1.80 |
| Example material 5 | 1.90 | 1.72 |
| Example material 6 | 1.85 | 1.86 |

Example materials 1 to 5 have PCS values that are *unexpectedly lower* than would have been expected based on their composition. Therefore, these flexible materials of the present invention have unexpectedly low calorific contents. This is advantageous, as these flexible materials can be used in the production of building materials such as facade surface coverings with increased fire safety properties.

Example materials 2 to 6 have PCS values of less than 2.0 MJ/kg. This is advantageous, as materials with a PCS value of less than 2.0 MJ/kg are known to have increased fire safety. Furthermore, as discussed above, a PCS value 2.0 MJ/kg or less is required to achieve a fire safety rating of A1 under the BS EN 13501-1:2018 standard.

### Flexibility

To measure the flexibility of example materials 4 and 7 to 9, 'the bend test' was repeated three times, with three samples of each of the example materials. Example material 9 was too rigid to successfully perform the procedure. The results for example materials 4, 7 and 8 are set out in Table 4, below.

**Table 4**

| | Flexibility (degrees) | | |
|---|---|---|---|
| | Test 1 | Test 2 | Test 3 |
| Example material 4 | 45 | 49 | 44 |
| Example material 7 | 31 | 33 | 33 |
| Example material 8 | 22 | 27 | 25 |

Thus, it can be seen that example material 4 consistently demonstrates particularly excellent flexibility.

## Claims

1. A facade surface covering for installation on a surface of a structure,
wherein the facade surface covering comprises one or more surface elements, and the surface elements comprise a flexible material comprising a flexible polymer component and a cementitious material component,
wherein the flexible polymer component comprises an acrylate ester homopolymer.

2. The facade surface covering according to claim 1, wherein the flexible material comprises:
at least 55 wt% of the flexible polymer component relative to the total weight of the flexible material, preferably 55 to 80 wt% of the flexible polymer component, more preferably 65 to 75 wt% of the flexible polymer component; and/or
at least 20 wt% of the cementitious material component relative to the total weight of the flexible material, preferably 20 to 45 wt% of the cementitious material component, more preferably 25 to 35 wt% of the cementitious material component.

3. The facade surface covering according to claims 1 or claim 2, wherein the acrylate ester homopolymer is a methacrylate ester homopolymer, preferably polymethyl methacrylate.

4. The facade surface covering according to any one of claims 1 to 3, wherein the cementitious material component comprises:
one or more materials selected from: cement, hydraulic cement, Portland cement, concrete, mortar, limestone, lime, hydrated lime, clay, ground shells, sand, silica sand, and gravel;
preferably one or more materials selected from: calcined lime, calcined clay and sand.

5. The facade surface covering according to any one of claims 1 to 4, wherein the cementitious material component comprises one or more additives selected from: binders, surfactants, polymer compounds and cellulose derivatives.

6. The facade surface covering according to any one of claims 1 to 5, wherein the surface elements comprise a coating of surface finish powder.

7. The facade surface covering according to any one of claims 1 to 6, wherein the facade surface covering further comprises a supporting layer, and the one or more surface elements are connected to the supporting layer,
wherein the supporting layer is preferably a flexible mesh, and the flexible mesh is preferably embedded within the one or more surface elements.

8. The facade surface covering according to any one of claims 1 to 7, wherein the one or more surface elements is a plurality of surface elements and the facade surface covering further comprises a filler provided between adjacent surface elements,
wherein the filler preferably also comprises a flexible material as defined in any one of claims 1 to 5,
wherein, optionally, the surface elements and the filler are made from the same material, subject to the surface elements and/or the filler optionally comprising different colouring additives.

9. The facade surface covering according to any one of claims 1 to 8, wherein the facade surface covering comprises a tessellating shape, such that when a plurality of the facade surface coverings are installed adjacent to one another, the one or more surface elements from a first of the facade surface coverings interlock with the one or more surface elements from a second of the facade surface coverings; and/or
wherein the facade surface covering has a thickness of less than about 10 mm.

10. A surface element for a facade surface covering, wherein the surface element comprises a flexible material as defined in any one of claims 1 to 5.

11. A filler for a facade surface covering, wherein the filler comprises a flexible material as defined in any one of claims 1 to 5.

12. A composition for producing a facade surface covering, comprising a flexible material as defined in any one of claims 1 to 5 and a solvent,
wherein, optionally, the solvent is water.

13. A building, a modular building unit or any component thereof, comprising a facade surface covering according to any one of claims 1 to 9,
wherein, optionally, the facade surface covering is attached to a surface of the building, modular building unit or any component thereof using adhesive, wherein the adhesive preferably comprises a flexible material as defined in any one of claims 1 to 5 and/or a composition as defined in claim 12.

14. Use of a composition as defined in claim 12 in:
the production of a facade surface covering, the production of one or more surface elements for a facade surface covering, or the production of a filler for a facade surface covering; or
as an adhesive for attaching a facade surface covering to a surface of a building, a modular building unit or any component thereof.

15. A method of producing a facade surface covering for installation on a surface of a structure, comprising:
(ii) providing a composition as defined in claim 12; and
(iv) drying the composition to provide one or more surface elements,
wherein, optionally, the method further comprises:
(i) providing a supporting layer; and
(iii) applying the composition onto the supporting layer, wherein the drying the composition provides one or more surface elements connected to the supporting layer,
wherein, further optionally, the method further comprises contacting the composition with a tool or object to impart a surface texture.

## Patentansprüche

1. Fassadenverkleidung für die Installation auf einer Oberfläche eines Tragwerks, wobei die Fassadenverkleidung ein oder mehrere Oberflächenelemente umfasst, und die Oberflächenelemente ein flexibles Material umfassen, das eine flexible Polymerkomponente und eine zementartige Materialkomponente umfasst,
wobei die flexible Polymerkomponente einen Acrylat-Ester-Homopolymer umfasst.

2. Fassadenverkleidung nach Anspruch 1, wobei das flexible Material umfasst:
mindestens 55 Gew.-% der flexiblen Polymerkomponente im Verhältnis zum Gesamtgewicht des flexiblen Materials, vorzugsweise 55 bis 80 Gew.-% der flexiblen Polymerkomponente, noch mehr vorzuziehen 65 bis 75 Gew.-% der flexiblen Polymerkomponente; und/oder
mindestens 20 Gew.-% der zementartigen Materialkomponente im Verhältnis zum Gesamtgewicht des flexiblen Materials, vorzugsweise 20 bis 45 Gew.-% der zementartigen Materialkomponente, noch mehr vorzuziehen 25 bis 35 Gew.-% der zementartigen Materialkomponente.

3. Fassadenverkleidung nach Anspruch 1 oder Anspruch 2, wobei der Acrylat-Ester-Homopolymer ein Methacrylat-Ester-Homopolymer, vorzugsweise Polymethyl-Methacrylat ist.

4. Fassadenverkleidung nach einem der Ansprüche 1 bis 3, wobei die zementartige Materialkomponente umfasst:
ein oder mehrere Materialien ausgewählt aus: Zement, hydraulischem Zement, Portland-Zement, Beton, Mörtel, Kalkstein, Kalk, Kalkhydrat, Ton, gemahlene Muscheln, Sand, Quarzsand und Kies;
vorzugsweise ein oder mehrere Materialien ausgewählt aus: Kalkstein, gebranntem Ton und Sand.

5. Fassadenverkleidung nach einem der Ansprüche 1 bis 4, wobei die zementartige Materialkomponente einen oder mehrere Zuschlagstoffe umfasst, ausgewählt aus: Bindemitteln, Tensiden, Polymerverbindungen und Cellulosederivaten.

6. Fassadenverkleidung nach einem der Ansprüche 1 bis 5, wobei die Oberflächenelemente eine Beschichtung mit Oberflächenveredelungspulver umfassen.

7. Fassadenverkleidung nach einem der Ansprüche 1 bis 6, wobei die Fassadenverkleidung ferner eine Tragschicht umfasst, und das eine oder die mehreren Oberflächenelemente mit der Tragschicht verbunden sind,
wobei die Tragschicht vorzugsweise ein flexibles Maschengewebe ist, und das flexible Maschengewebe vorzugsweise in die eine oder mehreren Oberflächenelemente eingebettet ist.

8. Fassadenverkleidung nach einem der Ansprüche 1 bis 7, wobei das eine oder die mehreren Oberflächenelemente eine Vielzahl von Oberflächenelementen sind und die Fassadenverkleidung ferner ein Füllmaterial umfasst, das zwischen benachbarten Oberflächenelementen bereitgestellt ist,
wobei das Füllmaterial vorzugsweise auch ein flexibles Material umfasst, wie in einem der Ansprüche 1 bis 5 definiert,
wobei optional die Oberflächenelemente und das Füllmaterial aus demselben Material hergestellt sind, wobei die Oberflächenelemente und/oder das Füllmaterial optional unterschiedliche Farbzusätze enthalten können.

9. Fassadenverkleidung nach einem der Ansprüche 1 bis 8, wobei die Fassadenverkleidung eine Mosaikform umfasst, sodass, wenn eine Vielzahl der Fassadenverkleidungen nebeneinander installiert sind, das eine oder die mehreren Oberflächenelemente einer ersten Fassadenverkleidung mit dem einen oder den mehreren Oberflächenelementen einer zweiten Fassadenverkleidung ineinandergreifen; und/oder
wobei die Fassadenverkleidung eine Dicke von weniger als etwa 10 mm aufweist.

10. Oberflächenelement für eine Fassadenverkleidung, wobei das Oberflächenelement ein flexibles Material umfasst, wie in einem der Ansprüche 1 bis 5 definiert.

11. Füllmaterial für eine Fassadenverkleidung, wobei das Füllmaterial ein flexibles Material umfasst, wie in einem der Ansprüche 1 bis 5 definiert.

12. Zusammensetzung für das Herstellen einer Fassadenverkleidung, umfassend ein flexibles Material, wie in einem der Ansprüche 1 bis 5 definiert, und ein Lösungsmittel,
wobei, das Lösungsmittel optional Wasser ist.

13. Ein Gebäude, eine modulare Gebäudeeinheit oder jede Komponente davon, umfassend eine Fassadenverkleidung nach einem der Ansprüche 1 bis 9,
wobei die Fassadenverkleidung optional an einer Oberfläche des Gebäudes, der modularen Gebäudeeinheit oder jeder Komponente davon unter Verwendung eines Haftmittels befestigt ist, wobei das Haftmittel vorzugsweise ein flexibles Material, wie in einem der Ansprüche 1 bis 5 definiert, und/oder eine Zusammensetzung, wie in Anspruch 12 definiert, umfasst.

14. Verwendung einer Zusammensetzung, wie in Anspruch 12 definiert, für:
das Herstellen einer Fassadenverkleidung, das Herstellen eines oder mehrerer Oberflächenelemente für eine Fassadenverkleidung oder das Herstellen eines Füllmaterials für eine Fassadenverkleidung; oder
als ein Haftmittel für das Befestigen einer Fassadenverkleidung auf einer Oberfläche eines Gebäudes, einer modularen Gebäudeeinheit oder jeder Komponente davon.

15. Verfahren für das Herstellen einer Fassadenverkleidung für eine Installation auf einer Oberfläche eines Tragwerks, umfassend:
(ii) Bereitstellen einer Zusammensetzung, wie in Anspruch 12 definiert; und
(iv) Trocknen der Zusammensetzung, um ein oder mehrere Oberflächenelemente bereitzustellen,
wobei optional das Verfahren ferner umfasst:
(i) Bereitstellen einer Tragschicht; und
(iii) Anwenden der Zusammensetzung auf der Tragschicht, wobei das Trocknen der Zusammensetzung ein oder mehrere Oberflächenelemente bereitstellt, die mit der Tragschicht verbunden sind,
wobei ferner optional das Verfahren des Weiteren das Inkontaktbringen der Zusammensetzung mit einem Werkzeug oder Objekt umfasst, um eine Oberflächentextur aufzubringen.

## Revendications

1. Parement de surface de façade destiné à être installé sur une surface d'une structure, dans lequel le parement de surface de façade comprend un ou plusieurs éléments de surface, et les éléments de surface comprennent un matériau flexible comprenant un composant polymère flexible et un composant matériau cimentaire,
dans lequel le composant polymère flexible comprend un homopolymère ester d'acrylate.

2. Parement de surface de façade selon la revendication 1, dans lequel le matériau flexible comprend :
au moins 55 % en poids du composant polymère flexible relativement au poids total du matériau flexible, de préférence de 55 à 80 % en poids du composant polymère flexible, mieux encore de 65 à 75 % en poids du composant polymère flexible ; et/ou
au moins 20 % en poids du composant matériau cimentaire relativement au poids total du matériau flexible, de préférence de 20 à 45 % en poids du composant matériau cimentaire, mieux encore de 25 à 35 % en poids du composant matériau cimentaire.

3. Parement de surface de façade selon la revendication 1 ou la revendication 2, dans lequel l'homopolymère ester d'acrylate est un homopolymère ester de méthacrylate, de préférence méthacrylate de polyméthyle.

4. Parement de surface de façade selon l'une quelconque des revendications 1 à 3, dans lequel le composant matériau cimentaire comprend :
un ou plusieurs matériaux sélectionnés parmi : ciment, ciment hydraulique, ciment de Portland, béton, mortier, calcaire, chaux, chaux hydratée, argile, coquilles de sol, sable, sable de silice, et gravier ;
de préférence un ou plusieurs matériaux sélectionnés parmi : chaux calcinée, argile calcinée, et sable.

5. Parement de surface de façade selon l'une quelconque des revendications 1 à 4, dans lequel le composant matériau cimentaire comprend un ou plusieurs additifs sélectionnés parmi : des liants, des surfactants, des composés polymères, et des dérivés de cellulose.

6. Parement de surface de façade selon l'une quelconque des revendications 1 à 5, dans lequel les éléments de surface comprennent un revêtement de poudre de finition de surface.

7. Parement de surface de façade selon l'une quelconque des revendications 1 à 6, dans lequel le parement de surface de façade comprend en outre une couche de support, et l'un ou les plusieurs éléments de surface sont reliés à la couche de support,
dans lequel la couche de support est de préférence un treillis flexible, et le treillis flexible est de préférence incorporé à l'intérieur de l'un ou des plusieurs éléments de surface.

8. Parement de surface de façade selon l'une quelconque des revendications 1 à 7, dans lequel l'un ou les plusieurs éléments de surface sont composés d'une pluralité d'éléments de surface et le parement de surface de façade comprend en outre un remplissage prévu entre des éléments de surface adjacents,
dans lequel le remplissage comprend de préférence également un matériau flexible tel que défini dans l'une quelconque des revendications 1 à 5,
dans lequel, facultativement, les éléments de surface et le remplissage sont faits du même matériau, dans la mesure où les éléments de surface et/ou le remplissage comprennent facultativement différents additifs colorants.

9. Parement de surface de façade selon l'une quelconque des revendications 1 à 8, dans lequel le parement de surface de façade comprend une forme tessellée, de manière telle que, lorsqu'une pluralité des parements de surface de façade sont installés de façon adjacente les uns aux autres, l'un ou les plusieurs éléments de surface, à partir d'un premier des parements de surface de façade, s'enclenchent avec l'un ou les plusieurs éléments de surface, à partir d'un second des parements de surface de façade ; et/ou
dans lequel le parement de surface de façade a une épaisseur de moins d'environ 10 mm.

10. Élément de surface pour un parement de surface de façade, dans lequel l'élément de surface comprend un matériau flexible tel que défini dans l'une quelconque des revendications 1 à 5.

11. Remplissage pour un parement de surface de façade, dans lequel le remplissage comprend un matériau flexible tel que défini dans l'une quelconque des revendications 1 à 5.

12. Composition pour produire un parement de surface de façade, comprenant un matériau flexible tel que défini dans l'une quelconque des revendications 1 à 5 et un solvant,
dans laquelle, facultativement, le solvant est de l'eau.

13. Bâtiment, unité de construction modulaire, ou un quelconque composant de ceux-ci, comprenant un parement de surface de façade selon l'une quelconque des revendications 1 à 9,
dans lequel ou laquelle, facultativement, le parement de surface de façade est fixé à une surface du bâtiment, de l'unité de construction modulaire, ou d'un quelconque composant de ceux-ci, en utilisant un adhésif, dans lequel ou laquelle l'adhésif comprend de préférence un matériau flexible tel que défini dans l'une quelconque des revendications 1 à 5 et/ou une composition telle que définie dans la revendication 12.

14. Utilisation d'une composition telle que définie dans la revendication 12, dans :
la production d'un parement de surface de façade, la production d'un ou de plusieurs éléments de surface pour un parement de surface de façade, ou la production d'un remplissage pour un parement de surface de façade ; ou
en tant qu'adhésif pour fixer un parement de surface de façade à une surface d'un bâtiment, d'une unité de construction modulaire, ou d'un quelconque composant de ceux-ci.

15. Procédé de production d'un parement de surface de façade destiné à être installé sur une surface d'une structure, comprenant :
(ii) la fourniture d'une composition telle que définie dans la revendication 12 ; et
(iv) le séchage de la composition pour fournir un ou plusieurs éléments de surface,
dans lequel, facultativement, le procédé comprend en outre :
(i) la fourniture d'une couche de support ; et
(iii) l'application de la composition sur la couche de support, dans lequel le séchage de la composition fournit un ou plusieurs éléments de surface reliés à la couche de support,
dans lequel, facultativement en outre, le procédé comprend en outre la mise en contact de la composition avec un outil ou objet pour conférer une texture de surface.
